# EUROPÄISCHE PATENTANMELDUNG

(11) **EP 2 629 382 A1**
(43) Veröffentlichungstag der Anmeldung: **21.08.2013**
(21) Anmeldenummer: 12155648.4
(22) Anmeldetag: 15.02.2012
(51) Int. Cl.: H02B 1/30, H02B 13/025

(54) **Schaltvorrichtung mit externem Modul**

(71) Anmelder: Eaton Industries GmbH, 53115 Bonn (DE)
(72) Erfinder: Reidt, Georg, 53913 Swisstal (DE); Jagusch, Lothar, 53123 Bonn (DE); Skupin, Johann, 53859 Niederkassel (DE)
(74) Vertreter: Leadbetter, Benedict

(57) **Zusammenfassung**

Die Erfindung betrifft eine Schaltvorrichtung, wobei die Schaltvorrichtung einen Schaltschrank mit einem Schaltschrankgehäuse, ein Schaltgerät, das im Schaltschrank angebracht ist, sowie ein externes Modul umfasst. Das externe Modul ist am Schaltschrankgehäuse angebracht und mit dem Schaltgerät verbunden. Das externe Modul umfasst ferner ein Anzeigeelement und/oder ein Bedienelement. Das Anzeigeelement ist von außerhalb des Schaltschrankgehäuses sichtbar und das Bedienelement ist von außerhalb des Schaltschrankgehäuses bedienbar.

## Beschreibung

Die Erfindung betrifft eine Schaltvorrichtung, wobei die Schaltvorrichtung einen Schaltschrank mit einem Schaltschrankgehäuse, ein Schaltgerät, das im Schaltschrank angebracht ist, sowie ein externes Modul umfasst.

Herkömmliche Schaltgeräte verfügen üblicherweise über ein Anzeigeelement zur Statusanzeige des Schaltgeräts und ein Bedienelement zur Steuerung seiner Betriebsparameter. Das Anzeigeelement und das Bedienelement sind dabei typischerweise am Schaltgerät angeordnet und mit ihm fest verbunden. Eine solche Anordnung des Anzeige- und Bedienelements erweist sich dann als nachteilig, wenn das Schaltgerät in einem Schaltschrank eingebaut ist. Oftmals ist das Anzeigeelement durch ein Schaltschrankgehäuse verdeckt, so dass die Betriebsparameter des Schaltgeräts nicht ermittelbar sind. Das Schaltschrankgehäuse beschränkt ferner den Zugriff auf das Bedienelement. Das Schaltgerät ist daher einer Steuerung möglicherweise nicht zugänglich.

Die DE 10 2005 016 544 A1 offenbart eine Modulfront für ein in einem Schaltschrank anzubauendes Schaltanlagenmodul. Die Modulfront umfasst Anzeige-und Bedienelemente sowie eine Schnittstelle, die dazu geeignet ist, Statusinformationen des Schaltanlagenmoduls abrufbar, zum Beispiel über Mittel zu einer drahtlosen Kommunikation, zur Verfügung zu stellen. Die Modulfront ist dabei integraler Bestandteil des Schaltanlagenmoduls und bildet anteilig das Gehäuse des Schaltanlagenmoduls aus. Nachteilig bei dieser Lösung ist der Umstand, dass die drahtlose Kommunikation von dem die Modulfront umgebenden, üblicherweise aus Metall hergestellten, Schaltschrankgehäuse erheblich gestört sein kann.

Der vorliegenden Erfindung liegt daher die Aufgabe zugrunde, eine Schaltvorrichtung mit einem Schaltgerät und einem Schaltschrank zur Aufnahme des Schaltgeräts dahingehend zu verbessern, dass das Abrufen von Betriebsparametern des im Schaltschrank befindlichen Schaltgerätes sowie die Bedienung des Schaltgerätes gut durchführbar ist.

Die Aufgabe wird durch die Schaltvorrichtung mit den Merkmalen des Anspruchs 1 gelöst.

Im Einzelnen umfasst die Schaltvorrichtung einen Schaltschrank mit einem Schaltschrankgehäuse, ein Schaltgerät, das im Schaltschrank angebracht ist, und ein externes Modul. Das Schaltgerät ist dabei nicht notwendigerweise vollständig in einem vom Schaltschrankgehäuse umgrenzten Innenraum angeordnet. Einzelne Komponenten des Schaltgeräts, zum Beispiel ein Schalthebel, können durch das Schaltschrankgehäuse hindurchgreifen, so dass diese von außerhalb des Schaltschrankgehäuses zugänglich sind. Das externe Modul ist am Schaltschrankgehäuse angebracht. Vorzugsweise ist das externe Modul derart angeordnet, dass es zumindest teilweise aus dem Schaltschrankgehäuse herausragt. Das externe Modul umfasst ein Anzeigeelement und/oder ein Bedienelement. Das Anzeigeelement bzw. das Bedienelement sind derart am externen Modul angeordnet, dass sie für eine sich außerhalb des Schaltschranks befindende Person gut zugänglich sind. Das Anzeigeelement ist von außerhalb des Schaltschrankgehäuses sichtbar, das Bedienelement ist von außerhalb des Schaltschrankgehäuses bedienbar. Vorzugsweise sind das Anzeige- und/oder das Bedienelement außerhalb des Schaltschrankgehäuse-Innenraumes angeordnet. Das externe Modul ist darüber hinaus mit dem Schaltgerät verbunden, zum Beispiel über ein dazu geeignetes Verbindungskabel und entsprechend geeignete Schnittstellen am Schaltgerät und dem externen Modul.

Bevorzugt umfasst das Schaltschrankgehäuse eine Schaltschranktür, so dass das externe Modul an der Schaltschranktür angebracht sein kann.

Es ist vorteilhaft, wenn das Anzeigeelement über eine mehrfarbige Anzeige verfügt. In einer bevorzugten Ausführungsform der Erfindung umfasst das Anzeigeelement eine Multicolor-LED. Durch die Verwendung der Multicolor-LED ist eine von einem Betriebsparameter des Schaltgeräts abhängige Farbdarstellung möglich. Insbesondere können durch Multicolor-LED unterschiedliche Farben in Abhängigkeit vom Betriebsparameter wie dem Strom und/oder der Spannung und/oder der Temperatur darstellbar sein. Eine solche Lösung bietet den Vorteil, die Darstellung unterschiedlicher, vom Betriebsparameter des Schaltgeräts abhängende, Betriebszustände des Schaltgeräts anzuzeigen, ohne zusätzlichen Bauraum zu beanspruchen, was bei einer Verwendung mehrerer einfarbiger LEDs der Fall ist. Bei der Darstellung des Betriebszustands kann es sich zum Beispiel um die Anzeige handeln, ob der Strom, bezogen auf einen vordefinierten Wert, kleiner als 70%, zwischen 70% und 100% (erster Betriebszustand), zwischen 100% und 120% (zweiter Betriebszustand) oder größer als 120% (dritter Betriebszustand) beträgt. Der Übergang zwischen jeweils zwei Betriebszuständen kann durch einen Farbwechsel der Multicolor-LED indiziert sein. Der Farbwechsel kann sprunghaft oder auch stetig erfolgen. Die Multicolor-LED kann darüber hinaus zusätzliche Informationen vermitteln, indem sie in Abhängigkeit vom Betriebsparameter/Betriebszustand blinkt oder anderweitig ihre Helligkeit verändert. Dadurch kann vor allem bei der Überschreitung/Unterschreitung eines vorbestimmten Grenzwertes durch den Betriebsparameter eine besonders gut wahrnehmbare signalisierende Wirkung erzielt werden.

Zur Unterstützung der Farbdarstellung umfasst das Anzeigeelement vorteilhaft einen Referenzring. Der Referenzring ist dazu vorgesehen, eine Zuordnung der von der Multicolor-LED darstellbaren Farben zu den dazu gehörenden Parameterwerten des Schaltgeräts visuell zu kennzeichnen. Dadurch kann zum Beispiel ein der angezeigten Farbe entsprechender Strombereich abgelesen und auf einen Blick erkannt werden. Der Referenzring ermöglicht es, zwei Informationen zu vermitteln: Eine Farbkodierung auf dem Referenzring erlaubt eine grobe quantitative Aussage bei gegebener Farbanzeige der Multicolor-LED, gleichzeitig erlaubt sie auch eine intuitive und schnell erfassbare Anzeige beispielsweise bei Gefahr. Dazu kann der Referenzring zum Beispiel die Zuordnung von roter Farbe zu einer Meldung "Gefahr", und entsprechend grüner Farbe zu der Meldung "OK" grafisch indizieren.

In einer bevorzugten Ausführungsform der Erfindung umfasst das Anzeigeelement des externen Moduls einen Leuchtmelder.

In einer weiteren vorteilhaften Ausführungsform der Erfindung umfasst das Bedienelement des externen Moduls einen Leuchttaster. Vorteilhaft umfasst das Bedienelement Mittel, die dazu geeignet sind, den Betriebszustand des Schaltgeräts zurück zu setzen oder zu quittieren.

Das externe Modul verfügt bevorzugt über eine Schnittstelle zur drahtlosen Kommunikation. Die Schnittstelle ist vorzugsweise als eine Bluetooth- und/oder eine ZigBee-Schnittstelle oder eine andere geeignete Schnittstelle ausgebildet. Besonders vorteilhaft ist es, wenn das externe Modul mittels der Schnittstelle zur drahtlosen Kommunikation Informationen über den Betriebsparameter des Schaltgeräts abrufbar zur Verfügung stellt. Bevorzugt erlaubt die Schnittstelle es, Daten mit einem externen Empfangs-/Sendegerät auszutauschen, die zum Beispiel Informationen über den Betriebsparameter und/oder den Betriebszustand des Schaltgeräts enthalten, oder auch Steueranweisungen an die Schaltvorrichtung beinhalten. Als ein solches externes Empfangs-/Sendegerät kommt beispielsweise ein Smartphone, ein tragbarer Rechner oder ein anderes geeignetes Gerät in Betracht.

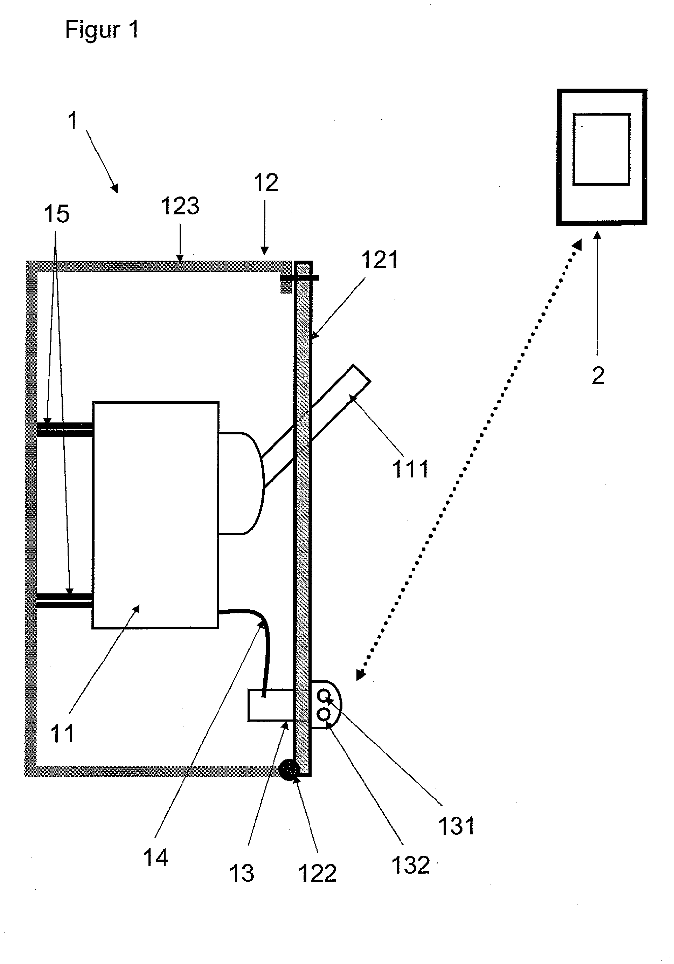

Die Erfindung wird nachfolgend in Verbindung mit der beiliegenden Figur beschrieben, wobei
- Figur 1: die erfindungsgemäße Schaltvorrichtung in schematischer Darstellung zeigt.

Im Einzelnen zeigt Figur 1 eine erfindungsgemäße Schaltvorrichtung 1. Die Schaltvorrichtung 1 umfasst einen Schaltschrank, dessen Schaltschrankgehäuse 12 in Figur 1 teilweise dargestellt ist, ein Schaltgerät 11, das im Schaltschrankgehäuse 12 mittels eines geeigneten Schienenelements 15 angebracht ist, sowie ein externes Modul 13. Das Schaltschrankgehäuse 12 umfasst ferner eine Schaltschranktür 121, die mittels eines geeigneten Scharniers 122 mit einem Hauptkörper 123 des Schaltschrankgehäuses 12 verbunden ist, so dass die Schaltschranktür um eine Drehachse des Scharniers 122 schwenkbar ist.

Das Schaltgerät umfasst einen Schalthebel 111, der durch das Schaltschrankgehäuse 12 hindurchreicht. Das externe Modul 13 ist an der Schaltschranktür 121 angebracht, wobei das externe Modul 13, durch die Schaltschranktür 121 hindurchreichend, teilweise außerhalb des Schaltschranks angeordnet ist. Das externe Modul 13 ist über ein Verbindungskabel 14 mit dem Schaltgerät 11 verbunden. Das Verbindungskabel 14 ist derart ausgestaltet, dass auch bei geöffneter Schaltschranktür 121 die Verbindung zwischen dem Schaltgerät 11 und dem externen Modul 13 nicht unterbrochen ist.

Ferner umfasst das externe Modul 13 ein Anzeigeelement 131, das einen Leuchtmelder umfasst, sowie ein Bedienelement 132, das einen Leuchttaster umfasst. Das Anzeigeelement 131 ist derart angeordnet, dass es von außerhalb des Schaltschrankgehäuses 12 sichtbar ist. Auch das Bedienelement 132 ist derart angeordnet, dass es von außerhalb des Schaltschrankgehäuses 12 bedient werden kann. Das externe Modul 13 verfügt über eine Schnittstelle zur drahtlosen Kommunikation. Ein externes Empfangs-/Sendegerät 2 kann über eine drahtlose Verbindung, die in Figur 1 durch einen gestrichelten Doppelpfeil gekennzeichnet ist, Daten mit dem externen Modul 13 austauschen.

### Bezugszeichenliste

- 1: Schaltvorrichtung
- 11: Schaltgerät
- 111: Schalthebel
- 12: Schaltschrankgehäuse
- 121: Schaltschranktür
- 122: Scharnier
- 123: Hauptkörper des Schaltschrankgehäuses
- 13: Externes Modul
- 131: Anzeigeelement
- 132: Bedienelement
- 14: Verbindungskabel
- 15: Schienenelement
- 2: Empfangs-/Sendegerät

## Patentansprüche

1. Schaltvorrichtung (1), umfassend einen Schaltschrank mit einem Schaltschrankgehäuse (12), ein Schaltgerät (11), das im Schaltschrank angebracht ist, sowie ein externes Modul (13), wobei das externe Modul (13) am Schaltschrankgehäuse (12) angebracht ist, und das externe Modul (13) mit dem Schaltgerät (11) verbindbar ist und ein von außerhalb des Schaltschrankgehäuses (12) sichtbares Anzeigeelement (131) und/oder ein von außerhalb des Schaltschrankgehäuses bedienbares Bedienelement (132) umfasst.

2. Schaltvorrichtung (1) nach Anspruch 1, **dadurch gekennzeichnet, dass** das Schaltschrankgehäuse (12) eine Schaltschranktür (121) umfasst, wobei das externe Modul (13) an der Schaltschranktür (121) angebracht ist.

3. Schaltvorrichtung (1) nach Anspruch 1 oder 2, **dadurch gekennzeichnet, dass** das Anzeigeelement (131) eine Multicolor-LED umfasst, wobei durch die Multicolor-LED unterschiedliche Farben in Abhängigkeit von einem Betriebsparameter des Schaltgeräts (11) darstellbar sind.

4. Schaltvorrichtung (1) nach Anspruch 3, **dadurch gekennzeichnet, dass** das Anzeigeelement (131) einen Referenzring aufweist, der die Abhängigkeit der Farbdarstellung der Multicolor-LED vom Betriebsparameter des Schaltgerätes (11) darstellt.

5. Schaltvorrichtung (1) nach einem der vorangehenden Ansprüche, **dadurch gekennzeichnet, dass** das Anzeigeelement (131) einen Leuchtmelder umfasst.

6. Schaltvorrichtung (1) nach einem der vorangehenden Ansprüche, **dadurch gekennzeichnet, dass** das Bedienelement (132) einen Leuchttaster umfasst.

7. Schaltvorrichtung (1) nach einem der vorangehenden Ansprüche, **dadurch gekennzeichnet, dass** das Bedienelement (132) Mittel zum Rücksetzen oder Quittieren eines Betriebszustands des Schaltgerätes (11) umfasst.

8. Schaltvorrichtung (1) nach einem der vorangehenden Ansprüche, **dadurch gekennzeichnet, dass** das externe Modul (13) über eine Schnittstelle zur drahtlosen Kommunikation verfügt.

9. Schaltvorrichtung (1) nach Anspruch 8, **dadurch gekennzeichnet, dass** die Schnittstelle zur drahtlosen Kommunikation als eine Bluetooth- oder eine ZigBee-Schnittstelle ausgebildet ist.

10. Schaltvorrichtung (1) nach einem der vorangehenden Ansprüche 8 oder 9, **dadurch gekennzeichnet, dass** das externe Modul (13) über die Schnittstelle zur drahtlosen Kommunikation Informationen über den Betriebsparameter des Schaltgerätes (11) abrufbar zur Verfügung stellt.
